# EUROPÄISCHE PATENTSCHRIFT

(11) **EP 0 780 639 B1**
(45) Veröffentlichungstag und Bekanntmachung des Hinweises auf die Patenterteilung: **19.03.2003**
(21) Anmeldenummer: 96119422.2
(22) Anmeldetag: 04.12.1996
(51) Int. Cl.: F23R 3/00, F02C 7/224, F02C 3/20

(54) **Gasturbinenbrennkammer**
Gas turbine combustion chamber
Chambre de combustion de turbine à gaz

(30) Priorität: 19.12.1995 DE 19547515
(43) Veröffentlichungstag der Anmeldung: 25.06.1997
(73) Patentinhaber: Airbus Deutschland GmbH, 21129 Hamburg (DE)
(72) Erfinder: Suttrop, Friedemann, Prof. Dr.-Ing., 52072 Aachen (DE)
(74) Vertreter: Hansmann, Dierk, Dipl.-Ing.

(56) Entgegenhaltungen:
- US-A- 2 621 477
- US-A- 3 237 400
- US-A- 5 012 638

## Beschreibung

Die Erfindung bezieht sich auf eine Gasturbinenbrennkammer für eine mit Wasserstoff betriebene Gasturbine, Wie z.B. in US 3 237 400 A beschrieben. Derartige Brennkammern bestehen im wesentlichen aus einem Gehäuse, einem Brenner und einem Flammrohr. Dabei ist zwischen dem Gehäuse und dem Flammrohr ein Spalt vorgesehen, der von Kühlluft durchströmt wird. Wenn der Wasserstoff der Turbine in flüssiger Form zugeführt wird und in gasförmigem Zustand verbrannt werden soll, ist ein Verdampfer erforderlich. Es sind verschiedene Lösungen zur Realisierung derartiger Verdampfer bekannt geworden. So ist es beispielsweise bekannt, den Verdampfer im Abgasstrahl der Turbine anzuordnen. Gemäß einer anderen bekannt gewordenen Lösung wird der Verdampfer im Bereich des Kompressors angeordnet, etwa als Zwischenkühler zwischen zwei Verdichterstufen oder am Eingang der Gasturbinenbrennkammer. Mit Ausnahme des letztgenannten Falles ergeben sich lange Leitungsführungen zur Brennkammer, was sich ungünstig auf die Geschwindigkeit auswirkt, mit der die Turbine auf Regelmaßnahmen reagiert. Darüber hinaus besteht in allen Fällen die Gefahr des Eisansatzes.

Demgemäß liegt der Erfindung die Aufgabe zugrunde, eine gattungsgemäße Brennkammer so auszubilden, daß sie zusätzlich die Funktion eines Verdampfers übernimmt.

Diese Aufgabe wird bei einer gattungsgemäßen Brennkammer dadurch gelöst, daß ein Verdampfer mit einem Eintritt für flüssigen Wasserstoff (LH2) und einen Austritt für den gasförmigen Wasserstoff (GH2) mit der Wand des Flammrohres integriert ist.

Dabei ist insbesondere von Vorteil, daß sich eine gute Kühlung der Gasturbinenbrennkammer durch rekuperativen Wärmetausch der Flammrohrwandungen ergibt und gleichzeitig die bisherige Schleier- oder Filmkühlung der Wandungen vermieden werden kann. Dadurch entfällt der Verbrauch von Kühlluft teilweise oder ganz; diese Luft kann dem Brenner zugeführt werden.

Durch Integration des Verdampfers in die Gasturbinenbrennkammer mit ihren hohen Drücken und Temperaturen ist Eisansatz leichter zu vermeiden als bei anderen Anordnungen.

Vorteilhafte Weiterbildungen der Erfindung sind in den Unteransprüchen angegeben.

So besteht ein Vorteil der Ausgestaltung nach Anspruch 2 darin, daß der betreffende fertigungstechnische Aufwand relativ gering ist.

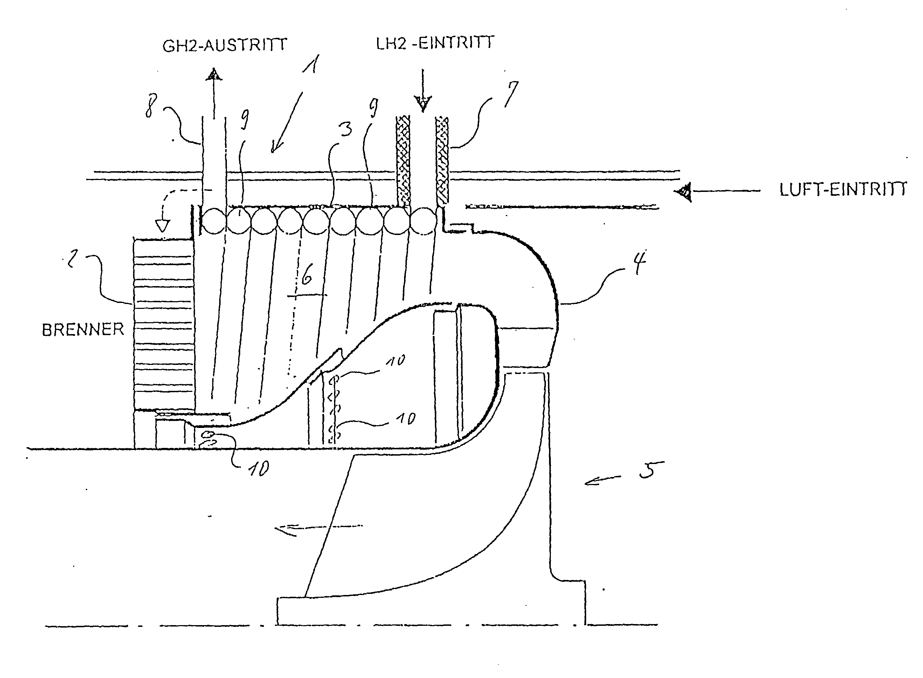

Die Erfindung ist anhand der Zeichnung dargestellt und nachfolgend näher erläutert. Bei der im Bild gezeigten Gasturbinenbrennkammer 1 handelt es sich beispielsweise um eine Ringbrennkammer, die einen Brenner 2 und ein Flammrohr 3 umfaßt, dessen Ausgang 4 mit einer Radialturbine 5 in Verbindung steht. Ein Verdampfer 6 mit einem Eintritt 7 für den flüssigen Wasserstoff (LH2) und einem Austritt 8 für den gasförmigen Wasserstoff (GH2) ist mit der äußeren Wand des Flammrohres 3 integriert und bedeckt damit einen Teil der Innenfläche des Flammrohres. In der gezeigten Beispielausführung ist der Verdampfer 6 als Rohrwendel ausgebildet, dessen einzelne Windungen 9 direkt mit der Wand verbunden sind. Wenn der GH2-Austritt des Verdampfers 6 direkt mit dem Brenner 2 verbunden wird, ergibt sich eine äußerst kompakte, einfache Leitungsführung. Durch die Integration des Verdampfers mit der Wand des Flammrohres 3 wird nicht nur eine Verdampfung des zu verbrennenden Wasserstoffs durchgeführt, sondern es wird auch eine sehr wirksame Kühlung der betreffenden Flammrohrwand erreicht. Da an einer auf diese Weise gekühlten Wand die bisherigen Öffnungen für Kühlluft entfallen, hat dies einen geringeren Kühlluftverbrauch zur Folge.

Eine Ausgestaltung der Erfindung besteht darin, daß der Verdampfer 6 anstatt mit der äußeren mit der inneren Wand des Flammrohres 3 integriert ist. In diesem Falle würden die Kühlluftöffnungen 10 entfallen. Es ist auch denkbar, daß sowohl die äußere als auch die innere Flammrohrwand mit einem Verdampfer versehen wird.

Eine andere Ausgestaltung der Erfindung besteht darin, daß der Verdampfer 6 aus Doppelwänden mit geeigneter interner Strömungsführung gebildet ist. Diese Lösung ist vorteilhaft, wenn eine glatte Innenfläche des Flammrohres 3 wünschenswert ist.

Ein derartiger Verdampfer kann je nach Bedarf einen Teil oder die gesamte Innenfläche des betreffenden Flammrohres bedecken.

Die Erfindung bezieht sich nicht nur auf Gasturbinenbrennkammern in Form von Ringbrennkammern sondern auf Gasturbinenbrennkammern von beliebiger Form. Hierunter fallen alle bekannten Bauformen von Gasturbinenbrennkammern wie Multiple combustion chamber bzw. Tubo-annular combustion chamber oder Spezialformen von Gasturbinenbrennkammern.

Wenn eine Turbine mehrere Einzelbrennkammern aufweist, kann jede Brennkammer mit einem eigenen Verdampfer versehen werden, dessen GH2-Austritt direkt mit dem jeweiligen Brenner verbunden wird.

## Patentansprüche

1. Gasturbinenbrennkammer mit einem Brenner und einem Flammrohr für eine mit Wasserstoff zu betreibende Gasturbine,
**dadurch gekennzeichnet, daß** ein Verdampfer (6) für flüssigen Wasserstoff (LH2) mit einem Eintritt (7) und einen Austritt (8) für den gasförmigen Wasserstoff (GH2) innerhalb des Flammrohres (3) so angeordnet ist, daß er mindestens einen Teil der Innenfläche des Flammrohres (3) bedeckt.

2. Gasturbinenbrennkammer nach Anspruch 1,
**dadurch gekennzeichnet, daß** der Verdampfer (6) als Rohrwendel ausgebildet ist.

3. Gasturbinenbrennkammer nach Anspruch 1,
**dadurch gekennzeichnet, daß** der Verdampfer (6) als Doppelwand ausgebildet ist.

4. Gasturbinenbrennkammer nach Anspruch 1,
**dadurch gekennzeichnet, daß** der Austritt (8) des Verdampfers (6) für den gasförmigen Wasserstoff unmittelbar mit dem Brenner (2) verbunden ist.

## Claims

1. A gas-turbine combustion chamber with a burner and a flame tube for a gas turbine to be operated with hydrogen, **characterised in that** an evaporator (6) for liquid hydrogen (LH2) with an inlet (7) and an outlet (8) for the gaseous hydrogen (GH2) is arranged within the flame tube (3) in such a way that it covers at least a part of the inner surface of the flame tube (3).

2. Gas-turbine combustion chamber according to Claim 1, **characterised in that** the evaporator (6) takes the form of a tube coil.

3. Gas-turbine combustion chamber according to Claim 1, **characterised in that** the evaporator (6) takes the form of a double wall.

4. Gas-turbine combustion chamber according to Claim 1, **characterised in that** the outlet (8) of the evaporator (6) for the gaseous hydrogen is directly connected to the burner (2).

## Revendications

1. Chambre de combustion avec brûleur et tube de flammes pour une turbine à gaz pouvant être actionnée avec de l'hydrogène,
et **caractérisée en ce qu'**un évaporateur (6) pour hydrogène liquide (LH2) est disposé avec une entrée (7) et une sortie (8) pour hydrogène gazeuse (GH2) à l'intérieur du tube de flammes (3), de manière à couvrir au moins une partie de la surface interne du tube de flammes (3).

2. Chambre de combustion de turbine à gaz selon la revendication 1, **caractérisée en ce que** l'évaporateur (6) se présente sous la forme d'un boudin de tuyau.

3. Chambre de combustion de turbine à gaz selon la revendication 1, **caractérisée en ce que** l'évaporateur (6) se présente sous la forme d'une double paroi.

4. Chambre de combustion de turbine à gaz selon la revendication 1, **caractérisée en ce que** la sortie (8) de l'évaporateur (6) destinée à l'hydrogène gazeuse est directement raccordée au brûleur (2).
